# EUROPÄISCHE PATENTSCHRIFT

(11) **EP 0 657 246 B1**
(45) Veröffentlichungstag und Bekanntmachung des Hinweises auf die Patenterteilung: **26.05.1999**
(21) Anmeldenummer: 93810852.9
(22) Anmeldetag: 06.12.1993
(51) Int. Cl.: B24B 13/00, B29D 11/00

(54) **Verfahren zur Herstellung von asphärischen, insbesondere torischen, Kontaktlinsen**
Process for production of aspherical lenses especially toric contact lenses
Procédé pour la fabrication de lentilles asphériques, specialement lentilles toriques de contact

(43) Veröffentlichungstag der Anmeldung: 14.06.1995
(73) Patentinhaber: Höfer, Peter, D-63741 Aschaffenburg (DE); Hörner, Wilhelm, D-63834 Sulzbach (DE); Langhans, Hartmut, D-63456 Hanau (DE); Lorenz, Holger, D-63773 Goldbach (DE); Reichner, Martin, 63739 Aschaffenburg (DE); Zimmermann, Dittmar, D-97833 Frammersbach (DE)
(72) Erfinder: Höfer, Peter, D-63741 Aschaffenburg (DE); Hörner, Wilhelm, D-63834 Sulzbach (DE); Langhans, Hartmut, D-63456 Hanau (DE); Lorenz, Holger, D-63773 Goldbach (DE); Reichner, Martin, 63739 Aschaffenburg (DE); Zimmermann, Dittmar, D-97833 Frammersbach (DE)
(74) Vertreter: Nöth, Heinz, Dipl.-Phys.

(56) Entgegenhaltungen:
- BE-A- 683 254
- DE-A- 2 036 598
- GB-A- 963 407
- US-A- 3 210 894

## Beschreibung

Die Erfindung betrifft ein Verfahren zur Herstellung von asphärischen, insbesondere torischen, Kontaktlinsen gemäss dem Oberbegriff von Patentanspruch 1.

Asphärische und speziell torische Kontaktlinsen finden heutzutage in besonderem Maße dann ihre Anwendung, wenn Astigmatismus der zu korrigierende Sehfehler ist. Astigmatismus zeichnet sich bekanntlich dadurch aus, dass die Krümmung des Auges in den zwei aufeinander senkrecht stehenden Hauptmeridianen einen unterschiedlichen Krümmungsradius aufweist. Gängige Praxis bei der Korrektur von Astigmatismus mittels harter Kontaktlinsen ist, dass je nach dem Grad, wie stark die beiden Krümmungsradien der Hauptmeridiane voneinander abweichen, ein unterschiedlicher Typ Kontaktlinse abgegeben wird. Bei geringem Astigmatismus (kleine Radiendifferenz) werden Standardkontaktlinsen (sphärische oder elliptische Geometrie der Rückfläche), bei mittlerem Astigmatismus randtorische und bei starkem Astigmatismus vollständig innentorische Kontaktlinsen abgegeben (vollständig torische Geometrie der Rückfläche). Die Abgabe des jeweiligen Linsentyps erfolgt mit der Massgabe, eine gute Anpassung und einen sicheren Sitz der Kontaktlinse auf dem Auge zu erreichen und andererseits einen guten und gleichmässigen Tränenflüssigkeitsaustausch zu gewährleisten. Insbesondere bei mittlerem und starkem Astigmatismus kann es nämlich bei der Abgabe von Standardkontaktlinsen mit sphärischer oder elliptischer Geometrie der Rückfläche dazu kommen, dass die Linse über den "steileren" (kleineren) Radius des Auges kippt und das Tragen einer solchen Linse sehr unkomfortabel wenn nicht gar unmöglich ist.

Randtorische und auch vollständig innentorische Kontaktlinsen zeichnen sich, wie beim Auge auch, dadurch aus, dass sie entweder im Randbereich (randtorische) oder über die gesamte Rückfläche (innentorische) der Kontaktlinse in Richtung der zwei Hauptmeridiane unterschiedliche Radien aufweisen. Diese Radien werden mittels spezieller Drehmaschinen auf die Rückfläche der Kontaktlinse gedreht, wobei es - bedingt durch die beiden unterschiedlichen Radien - entlang des Rands der Kontaktlinse zwangsläufig zu unterschiedlichen Randdicken der Kontaktlinse kommt. Durch die unterschiedlichen Randdicken der Kontaktlinse kann das Auge unterschiedlich mechanisch belastet und der gleichmäßige Tränenflüssigkeitsaustausch beeinträchtigt werden.

Im nächstkommenden Stand der Technik gemäß GB-A-963 407 ist ein Verfahren zur Herstellung von Kontaktlinsen der eingangs genannten Art bekannt geworden, bei dem eine Rotationsoberfläche an einem Kontaktlinsenrohling gebildet wird, der Kontaktlinsenrohling mittels zweier gegeneinander gerichteter Kräfte, die unter rechtem Winkel zur Rotationsachse der Rotationsfläche wirken, zusammengepreßt und somit verformt wird. Durch maschinelle Bearbeitung wird die derart verformte Oberfläche des Kontaktlinsenrohlings wieder in die Form einer Rotationsfläche gebracht. Anschließend werden die Kräfte aufgehoben, so daß sich der verformte Kontaktlinsenrohling entspannen und zurückformen kann.

Aus der US-A-3 210 894 ist ein Verfahren zum Herstellen asphärischer Oberflächen auf Spiegeln oder Linsen bekannt geworden. Dabei wird ein Linsenrohling, der schon eine sphärische Oberfläche aufweisen kann, in einer Öffnung eines Druckgefäßes gehalten, so daß die zu bearbeitende Oberfläche nach außen weist. Ein in dem Druckgefäß enthaltenes Druckfluid wird unter Druck gesetzt und verformt durch seine Druckkraft den gesamten Linsenrohling und erzeugt eine verformte Oberfläche. An dem verformten Linsenrohling wird die Oberfläche bearbeitet. Nach Rücknahme der Druckkraft und Rückbiegung der Linse erhält man die gewünschte asphärische Oberfläche der Linse.

Es ist daher eine Aufgabe der Erfindung, ein Verfahren zu schaffen, mit dem generell asphärische, insbesondere aber randtorische und auch vollständig innentorische Kontaktlinsen hergestellt werden können, die trotz der unterschiedlichen Radien in den beiden Hauptmeridianen eine gleichmässige Randdicke aufweisen.

Diese Aufgabe wird erfindungsgemäss durch die Merkmale des Patentanspruches 1 gelöst. Nach dem Entspannen der Kontaktlinse ergibt sich die torische Eigenschaft in dem Bereich der Kontaktlinse, der im verformten Zustand mittels Drehtechnik bearbeitet worden war. Da die Drehtechnik zur Anwendung kommt und nur ein Radius notwendig ist (die Differenz der Radien in den Hauptmeridianen wird ja durch die Verformung des Rohlings erzielt), können auf diese Weise Kontaktlinsen hergestellt werden, die einerseits gleichmässige Randdicken aufweisen, auf der anderen Seite die torischen Eigenschaften aufweisen, die auch bei starkem Astigmatismus einen guten Tragekomfort der Kontaktlinse und einen guten Tränenflüssigkeitsaustausch unter der Linse ermöglichen bzw. bei starken Augenverkrümmungen überhaupt das Tragen von Kontaktlinsen ermöglichen.

Eine Ausführungsvariante des erfindungsgemässen Verfahrens zeichnet sich dadurch aus, dass der entspannte Kontaktlinsenrohling am Rand in dem einen Hauptmeridian um den Betrag elastisch verformt wird, der dem sagittalen Höhenunterschied entspricht, der sich bei einer Kontaktlinse mit vorgegebenen Zentralradius und einer vorgegebenen Differenz der Radien in den beiden Hauptmeridianen am Rand der Rückfläche ergibt. Mit anderen Worten heisst das, dass der Kontaktlinsenrohling in dem Meridian, in dem er vor der spanenden Bearbeitung verformt wird, um genau den Betrag elastisch verformt wird, der nach dem Entspannen dem sagittalen Höhenunterschied zwischen der verformten und der nicht verformten Rückfläche entspricht.

In einer vorteilhaften Ausführungsvariante des Verfahrens wird der verformte Kontaktlinsenrohling vor dem Drehen der Rückfläche an der Halterung festgeklebt. Dadurch befindet sich der Kontaktlinsenrohling immer in einer genau definierten Position.

Dabei kann der Kontaktlinsenrohling einen Stumpf aufweisen, der in die Halterung eingesetzt wird. Der Stumpf weist üblicherweise einen Durchmesser von etwa 0.5 mm bis etwa 12.0 mm auf. Die Halterung weist eine im wesentlichen konisch verlaufende Anlagefläche auf, gegen die der an den Stumpf anschliessende Teil des Kontaktlinsenrohlings, aus dem dann die Kontaktlinse erstellt wird, geklebt wird. Diese Vorgehensweise ermöglicht eine einfache und sichere Fixierung des Kontaktlinsenrohlings.

In einer vorteilhaften Verfahrensvariante wird nach der Erstellung der Rückfläche gleich die Vorderfläche des Kontaktlinsenrohlings an dem noch verformten Kontaktlinsenrohling erstellt wird. So können beispielsweise Kontaktlinsen mit gleichmässiger Randdicke erstellt werden, die sowohl auf der Rückfläche zumindest im Randbereich torische Gestalt aufweisen, und die zusätzlich auch noch auf der Vorderfläche torische Gestalt aufweisen können. Dabei kann die Torizität der Vorderfläche auf die gleiche Weise erzeugt werden, da die Frontfläche der Kontaktlinse ja noch an dem verformten Rohling erstellt und erst dann die Kontaktlinse entspannt wird.

Dabei ist es zweckmässig, wenn der Rohling nach der Erstelung der Rückfläche in die Halterung eingespannt bleibt, und die Halterung bei der Erstellung der Vorderfläche einfach mit zerspant wird. Dies wiederum ist dann besonders einfach, wenn eine Halterung aus einem zerspanbaren Material verwendet wird und zwar vorzugsweise aus einem Material mit ählichen Zerspaneigenschaften wie der Kontaktlinsenrohling. Insbesondere kann hierzu eine Halterung aus Polymethylmethacrylat verwendet werden.

Im folgenden wird die Erfindung anhand der Zeichnung näher erläutert Es zeigen in schematischer Darstellung und zum Teil im Schnitt:
- Fig. 1-4: eine Variante des erfindungsgemässen Verfahrens mit einem Kontkatlinsenrohling und einer entsprechenden Halterung,
- Fig. 5: eine vergrösserte Darstellung der Fig. 3,
- Fig. 6-9: das Verfahren gemäss Fig. 1-4 mit einem anderen Rohling und einer anderen Halterung,
- Fig. 10-11: eine weitere Ausgestaltung des Rohlings,
und
- Fig. 12-14: eine weitere Ausgestaltung des Rohlings.

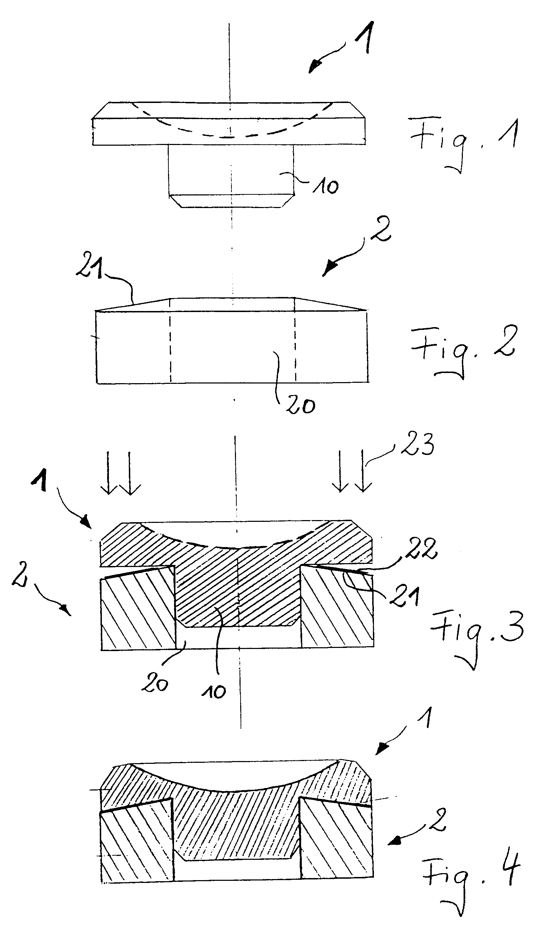

In den Fig. 1-4 ist ein vorgefertigter Kontaktlinsenrohling 1 (Fig. 1) sowie eine rotationssysmetrische Halterung 2 (Fig. 2) erkennbar. Der Rohling 1 weist einen Stumpf 10 auf, der in eine entsprechende Aufnahme, hier in Form einer Durchgangsbohrung 20, einsetzbar ist. Die Halterung 2 weist ferner eine konische Anlagefläche 21 auf. Der Rohling 1 ist auf der Seite, auf die die Rückfläche der Kontaktlinse gedreht werden soll, bereits mit einer vorgefertigten Kurve versehen, deren Radius kleiner oder gleich dem Radius ist, den die fertige Rückfläche schliesslich aufweisen soll.

Das erfindungsgemässe Verfahren funktioniert nun wie folgt: Der vorgefertigte Rohling 1 wird in die Halterung 2 eingesetzt (Fig. 3). Die konische Anlagefläche 21 wird in einem Hauptmeridian (die Linie dieses Hauptmeridians liegt hier genau in der Papierebene) mit einem Kleber 22 versehen. Anschliessend wird der Rohling 1 entlang dieser Linie von oben her mit einer Kraft, die durch die Pfeile 23 angedeutet ist, beaufschlagt. Auf diese Weise wird der Rohling 1 aus seinem entspannten Ausgangszustand elastisch verformt, gegen die konische Anlagefläche 21 gedrückt und an ihr festgeklebt. In dem anderen Hauptmeridian, der senkrecht auf dem Meridian steht, in welchem der Rohling an die Anlagefläche 21 geliebt wird, wird der Rohling 1 nicht verformt. Die Tatsache, dass der Rohling schon mit einer vorgefertigen Kurve auf der späteren Rückfläche der Kontaktlinse versehen ist, ermöglicht dabei, die Verformung des Rohlings optisch zu messen und zu überwachen.

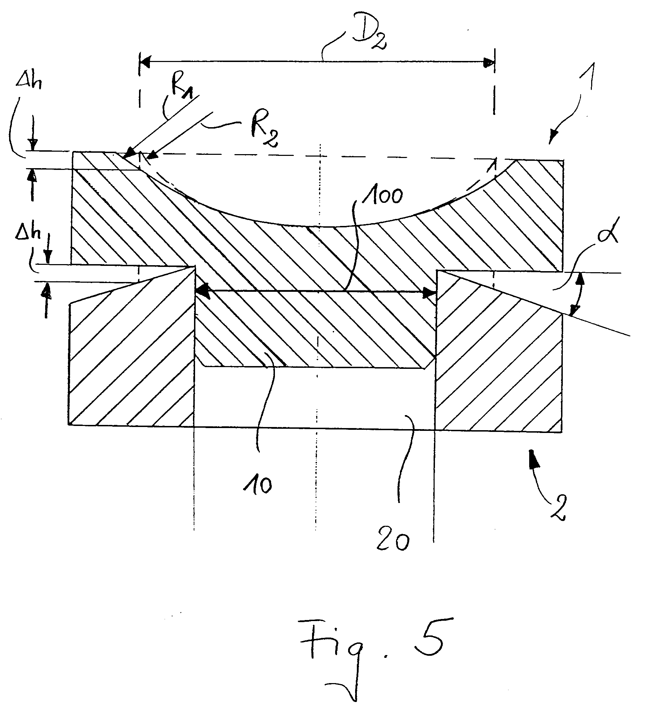

Ein auf diese Art und Weise verformter und an der Anlagefläche 21 festgeklebter Rohling 1 ist in Fig. 4 dargestellt. Die Halterung 2 mit dem angeklebten Rohling 1 kann nun in eine Drehmaschine eingesetzt werden und die Rückfläche in konventioneller Drehtechnik erstellt werden. Wird nun der Rohling 1 wieder entspannt, so verändert sich die Rückfläche der Linse in Richtung des Hauptmeridians, in dem der Rohling an die Halterung geklebt war, am stärksten bis hin in die Richtung des anderen Hauptmeridians, in dem sie sich überhaupt nicht verändert, da sie in diesem Meridian vor dem Drehen der Rückfläche auch nicht elastisch verformt worden ist. Auf diese Weise werden in den beiden Hauptmeridianen unterschiedliche Radien erzeugt, was anhand der vergrösserten Darstellung in Fig. 5 noch detaillierter erläutert werden soll.

Anhand der in Fig. 5 erkennbaren vergrösserten Darstellung ist ausser dem Rohling 1 und der Halterung 2 auch noch die geometrische Gestalt der Rückfläche, die nach dem elastischen Verformen und dem Drehen wieder entspannt worden ist, besser vorstellbar. In dem Hauptmeridian, in welchem der Rohling vor dem Drehen der Rückfläche nicht verformt worden ist und der hier in der Papierebene liegt (die Darstellung ist also gegen die Darstellung in Fig. 3 um 90° um die Rotationsachse herum verdreht), stimmt der Radius der Rückfläche mit dem Radius R₁ überein, mit dem die Rückfläche gedreht worden ist als der Rohling 1 elastisch verformt gewesen ist. In dem anderen Hauptmeridian hingegen ist der Radius R₂ im Randbereich um eine definierte Differenz kleiner. Dies ist in Fig. 5 strichliert angedeutet. Auf diese Differenz und wie diese Differenz erreicht wird, wird im folgenden noch genauer eingegangen.

Aus Fig. 5 ist ersichtlich, wie eine solche Differenz der Radien in den beiden Hauptmeridianen erzeugt werden kann. Dazu wird der vorgefertigte Rohling 1 aus dem entspannten Zustand in einem Hauptmeridian elastisch verformt, bevor die Rückfläche der Kontaktlinse gedreht wird. Soll nun eine definierte Differenz der Radien in den beiden Hauptmeridianen erzeugt werden (eine definierte "Torizität"), so muss der Rohling 1 vor dem Drehen der Rückfläche an der Stelle, an der aufgrund der unterschiedlichen Radien der sagittale Höhenunterschied am Rand der Rückfläche nach dem Drehen und anschliessenden Entspannen den Betrag Δh aufweisen muss, um genau diesen Betrag Δh elastisch verformt werden. Auf diese Weise verformt wird der Rohling 1 gegen die konische Anlagefläche 21 der Halterung 2 geklebt und anschliessend die Rückfläche der Kontaktlinse gedreht und gegebenenfalls poliert. Nachdem die Rückfläche erstellt und die Kontaktlinse wieder entspannt worden ist, verringert sich der Radius in dem Hauptmeridian, in welchem der Rohling elastisch verformt worden ist, wieder (durch das Entspannen bedingt).

Bei der hier beschriebenen Verfahrensvariante wird eine randtorische Kontaktlinse hergestellt, da der Rohling 1 nur in seinem Randbereich elastisch verformt wird. Im zentralen Bereich, also im wesentlichen im Bereich des Stumpfs 10, wird der Rohling 1 hingegen nicht verformt. Es wird also eine Kontaktlinse hergestellt, deren Rückfläche nur im Randbereich eine torische Geometrie aufweist. Im optisch wirksamen Bereich, wo die eigentliche Sehkorrektur erfolgt, weist die Rückfläche eine sphärische oder auch elliptische Geometrie auf. Selbstverständlich können aber mit diesem Verfahren auch vollständig bzw. weitestgehend vollständig rückflächentorische Kontaktlinsen hergestellt werden, d.h. Kontaktlinsen deren Rückflächen auch im zentralen, optisch wirksamen Bereich der Rückfläche eine torische Geometrie aufweisen. Dazu kann der Durchmesser 100 des Stumpfs 10 des Kontaktlinsenrohlings 1 sehr klein gewählt werden.

Beispielsweise kann der Radius, mit dem die Rückfläche gedreht wird, 7.9 mm betragen, und die Rückfläche, die in den elastisch verformten Rohling 1 gedreht wird, kann sphärisch sein (nach dem Entspannen ist sie dann im Randbereich torisch). Der Stumpf 10 kann einen Durchmesser 100 von etwa 0.5 mm bis 12 mm und insbesondere einen Durchmesser 100 von 6.0 mm aufweisen. Der sagittale Höhenunterschied Δh bei einem Durchmesser 100 des Stumpfs 10 von 6.0 mm und infolgedessen der Neigungswinkel α, den die konische Anlagefläche 21 mit der Horizontalen einschliesst, ergibt sich dann bei einer Differenz der Radien R₁ und R₂ in den beiden Hauptmeridianen gemäss nachfolgender Tabelle. Hierbei beträgt der Durchmesser der Rückfläche in dem Meridian, in welchem der Rohling elastisch verformt worden ist, nach dem Entspannen 10.3 mm.

| Durchmesser d. Stumpfs [mm] | Durchmesser D₂ [mm] | Differenz der Radien R₁-R₂ [mm] | Sagittalhöhenunterschied Δh [mm] | Neigungswinkel α [°] |
|---|---|---|---|---|
| 6 | 10.3 | 0.1 | 0.023 | 0.621 |
| | | 0.2 | 0.046 | 1.216 |
| | | 0.3 | 0.067 | 1.788 |
| | | 0.4 | 0.088 | 2.338 |
| | | 0.5 | 0.108 | 2.867 |
| | | 0.6 | 0.127 | 3.376 |
| | | 0.7 | 0.145 | 3.866 |
| | | 0.8 | 0.163 | 4.340 |
| | | 0.9 | 0.180 | 4.796 |
| | | 1.0 | 0.196 | 5.237 |

Wie bereits erwähnt, ist nur die Herstellung einer randtorischen Kontaktlinse beschrieben, es können selbstverständlich auch vollständig innentorische Kontaktlinsen auf diese Art und Weise hergestellt werden. Es ist auch möglich, Kontaktlinsen mit anderen asphärischen Geometrien der Rückflächen herzustellen, das Mass der Verspannung bzw. die Form der Anlagefläche der Halterung muss dann entsprechend der gewünschten Geometrie geändert werden. Ferner ist auch klar, dass sich an den Rand der Rückfläche noch ein sogenannter Bevel anschliessen kann, der den Tragekomfort der Kontaktlinse noch weiter erhöht. Aus zeichnerischen Gründen ist ein solcher Bevel aber hier nicht dargestellt. Die Ausgestaltung eines solchen Bevels ist auch konventionell und nicht Gegenstand der vorliegenden Erfindung.

Ist nun die Rückfläche einer Kontaktlinse auf die bisher beschriebene Art und Weise hergestellt worden, so kann der noch elastisch verformte Rohling 1, bei dem ja bisher nur die Rückfläche erstellt ist, mit der Rückfläche auf eine Kalotte aufgekittet werden. Für den Fall, dass in den verformten Rohling 1 eine sphärische Rückfläche gedreht worden ist, kann er im verformten sehr einfach auf eine sphärische Kalotte aufgekittet werden. Nun kann die Vorderfläche der Kontaktlinse mittels Drehtechnik erstellt werden.

Hierzu ist natürlich Voraussetzung, dass die Halterung 2, gegen deren konische Anlagefläche 21 der Rohling 1 angeklebt ist, aus einem zerspanbaren Material besteht. Die Kontaktlinsenrohlinge 1 können beispielsweise aus einem spanend bearbeitbaren Material bestehen, beispielsweise aus PMMA. Vorzugsweise besteht die Halterung 2 aus einem Material mit ähnlichen Zerspaneigenschaften wie die der Kontaktlinse bzw. des Rohlings 1, oder sogar aus dem gleichen Material, wie beispielsweise aus PMMA. Bei der spanenden Bearbeitung wird dann also zunächst die Halterung 2 zerspant und nachdem die Halterung 2 zerspant ist am Rohling 1 die Vorderfläche der Kontaktlinse erstellt. Da auch hier die Drehtechnik zum Einsatz kommt, entstehen somit Kontaktlinsen, die entlang des gesamten Rands eine gleichmässige Dicke aufweisen und damit eine gleichmässige mechanische Belastung des Auges und einen guten Austausch von Tränenflüssigkeit unter der Kontaktlinse ermöglichen. Nach der Fertigstellung der Vorderfläche wird die Kontaktlinse von der Kalotte wieder entfernt und kann sich wieder entspannen. Da die Kontaktlinse auch bei der Erstellung der Vorderfläche nur im Randbereich elastisch verformt gewesen ist, kann ihre Geometrie im zentralen Bereich, wo also die Sehkorrektur erfolgt, sphärisch oder elliptisch sein. Selbstverständlich können aber auch beidseitig asphärische und speziell vollständig bitorische Linsen, bei denen also die Rückfläche und die Vorderfläche eine torische Geometrie aufweisen, auf diese Weise erstellt werden.

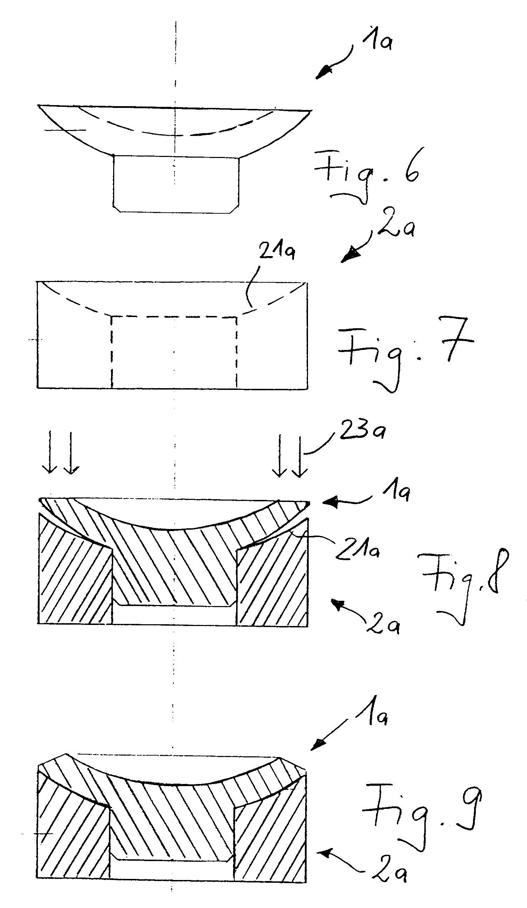

In den Fig. 6-9 sind wesentliche Verfahrensschritte noch einmal gut zu erkennen, wobei aber ein von der Form her unterschiedlicher vorgefertigter Rohling 1a und eine entsprechende Halterung 2a vorgesehen sind. Durch Beaufschlagung mit Kraft 23a in einem Hauptmeridian wird der Rohling in diesem Hauptmeridian gegen die Anlagefläche 21a gedrückt und gegen sie festgeklebt, analog zu Fig. 4. Anschliessend kann die Rückfläche gedreht werden.

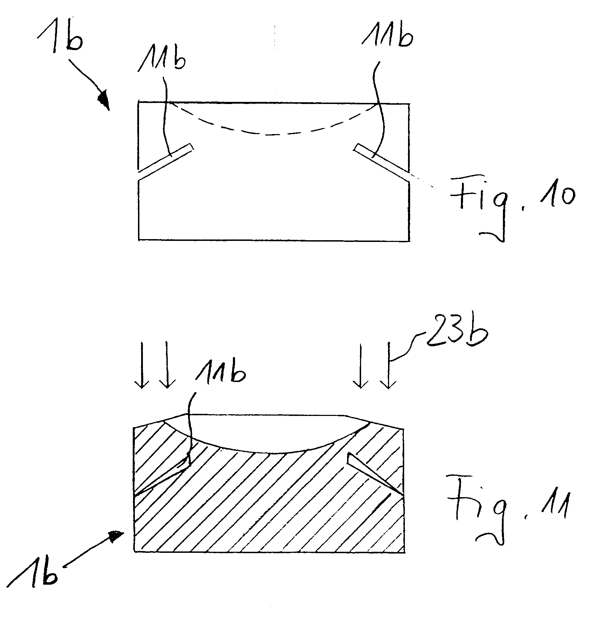

In Fig. 10 und Fig. 11 ist eine weitere Ausgestaltung eines Rohlings 1b zu erkennen. Dieser Rohling 1b ist im Prinzip ein Monoblock, der mit zwei parallelen Schlitzen 11b (ähnlich wie in Fig. 13) versehen ist. Durch die Beaufschlagung mit einer Kraft 23b in dem Hauptmeridian, der genau senkrecht zu diesen Schlitzen 11b verläuft, wird der obere Teil des Rohlings 1b gegen den unteren gedrückt, die Schlitze 11b in dem Hauptmeridian geschlossen und der obere Teil des Rohlings gegen den unteren festgeklebt. Anschliessend kann in den auf diese Weise elastisch verformten Rohling 1b die Rückfläche gedreht werden.

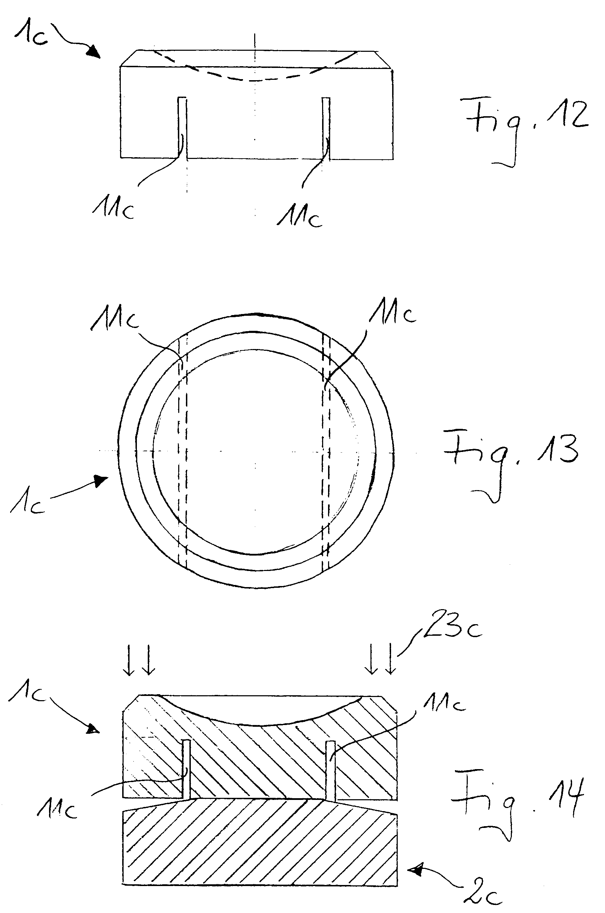

Ein weiteres Beispiel für die Ausgestaltung eines Rohlings 1c ist anhand der Fig. 12-14 zu erkennen. Der Rohling 1c weist zwei parallel verlaufende Schlitze 11c auf. Durch Beaufschlagung mit einer Kraft 23c entlang des Hauptmeridians, der zu den beiden Schlitzen 11c senkrecht verläuft, wird der Rohling elastisch verformt, in diesem Hauptmeridian gegen die Halterung 2c gedrückt und gegen die konische Anlagefläche 21c festgeklebt. Anschliessend kann die Rückfläche gedreht werden.

Zum Festkleben des Rohlings gegen die Anlagefläche der Halterung kann im Prinzip jeder geeignete Kleber verwendet werden, der das Material des Rohling nicht verändert und der vor allen Dingen mit dem menschlichen Auge verträglich ist für den Fall, dass ganz geringe Reste des Klebstoffs einmal auf der Linse übrig bleiben. In dem Fall, in welchem die Halterung beim Drehen der Vorderfläche zuerst abgedreht wird, wird anschliessend auch der Klebstoff mit abgedreht, so dass normalerweise keine Reste des Klebstoffs auf der fertigen Linse übrigbleiben. Es ist auch denkbar, dass der Spalt, Schlitz oder ähnliches zuerst mit einem polymerisierbaren Material gefüllt wird, dann in dem einen Hauptmeridian der Rohling elastisch verformt wird, dann das Material im Spalt bzw. Schlitz polymerisiert wird und somit der elastisch verformte Rohling in verformtem Zustand fixiert wird. Anschliessend kann dann die Rückfläche gedreht werden.

Mit dem erfindungsgemässen Verfahren ist es also möglich, Kontaktlinsen herzustellen, die zumindest im Randbereich eine torische Geometrie aufweisen, aber auch solche Kontaktlinsen, deren Rückfläche eine vollständig torische Geometrie aufweist. Gleichzeitig weisen nach diesem Verfahren hergestellte Kontaktlinsen eine gleichmässige Dicke entlang ihres Rands auf, was eine gleichmässige mechanische Belastung des Auges und einen guten Austausch der Tränenflüssigkeit ermöglicht. Ausserdem ist es mit Kontaktlinsen, die nach diesem Verfahren hergestellt werden, möglich, die Linse an den flacheren (also den grösseren) Radius des Auges anzupassen. Bei den lediglich randtorischen Kontaktlinsen ist es ausserdem möglich, in dem zentralen Bereich der Linse jede beliebige Geometrie vorzusehen.

## Patentansprüche

1. Verfahren zur Herstellung von Kontaktlinsen mit zumindest im Randbereich asphärischer, insbesondere torischer Rückfläche, bei dem ein Kontaktlinsenrohling (1) in eine Halterung (2) eingesetzt und in einem Hauptmeridian zumindest im Randbereich elastisch verformt wird, an dem verformten Kontaktlinsenrohling (1) die Rückfläche der Kontaktlinse mittels Drehtechnik erstellt wird und die Kontaktlinse nach ihrer Erstellung entspannt wird,
dadurch **gekennzeichnet,**
daß zur elastischen Verformung der Kontaktlinsenrohling (1) durch eine entlang dem Hauptmeridian und senkrecht dazu einwirkenden Kraft (23) gegen eine konische Anlagefläche (21) gedrückt und befestigt wird, wobei der Kontaktlinsenrohling (1) in dem senkrecht dazu liegenden Hauptmeridian nicht verformt wird.

2. Verfahren nach Anspruch 1, dadurch gekennzeichnet, dass der entspannte Kontaktlinsenrohling (1) am Rand in dem einen Hauptmeridian um den Betrag elastisch verformt wird, der einem sagittalen Höhenunterschied (Δh) entspricht, der sich bei einer Kontaktlinse mit vorgegebenen Zentralradius (R₁) und einer vorgegebenen Differenz der Radien (R₁-R₂) in den beiden Hauptmeridianen am Rand der Rückfläche ergibt.

3. Verfahren nach einem der Ansprüche 1 oder 2, dadurch gekennzeichnet, dass der verformte Kontaktlinsenrohling (1) vor dem Drehen der Rückfläche an der Halterung (2) festgeklebt wird.

4. Verfahren nach Anspruch 3, dadurch gekennzeichnet, dass der Kontaktlinsenrohling (1) einen Stumpf (10) aufweist, der in die Halterung eingesetzt wird, und dass die Halterung eine im wesentlichen konisch verlaufende Anlagefläche aufweist, gegen die der an den Stumpf anschliessende Teil des Kontaktlinsenrohlings (1), aus dem die Kontaktlinse erstellt wird, geklebt wird.

5. Verfahren nach einem der Ansprüche 1 bis 4, dadurch gekennzeichnet, dass nach der Erstellung der Rückfläche die Vorderfläche des Kontaktlinsenrohlings (1) an dem noch verformten Kontaktlinsenrohling erstellt wird.

6. Verfahren nach Anspruch 5, dadurch gekennzeichnet, dass eine Halterung (2) ans einem zerspanbaren Material verwendet wird, vorzugsweise aus einem Material mit ählichen Zerspaneigenschaften wie der Kontaktlinsenrohling (1).

## Claims

1. A process for the manufacture of contact lenses with a rear face which at least in the edge region is aspherical, in particular toric, in which a contact lens blank (1) is fitted into a holder (2) and elastically deformed in a principal meridian at least in the edge region, the rear face of the contact lens is produced by means of turning on the deformed contact lens blank (1) and the contact lens is released after production thereof,
characterised in that
for the purposes of elastic deformation the contact lens blank (1) is pressed and fixed by a force (23) acting along the principal meridian and perpendicularly thereto against a conical support surface (21), the contact lens blank (1) not being deformed in the principal meridian which is perpendicular thereto.

2. A process according to claim 1 characterised in that the released contact lens blank (1) is elastically deformed at the edge in the one principal meridian by the amount which corresponds to a sagittal height difference (Δh) which occurs in the case of a contact lens with a predetermined central radius (R₁) and a predetermined difference in respect of the radii (R₁-R₂) in the two principal meridians at the edge of the rear face.

3. A process according to one of claims 1 and 2 characterised in that the deformed contact lens blank (1) is glued fast to the holder (2) before the operation of turning the rear face.

4. A process according to claim 3 characterised in that the contact lens blank (1) has a stump (10) which is fitted into the holder and that the holder has a substantially conically extending support surface, against which the part, adjoining the stump, of the contact lens blank (1) from which the contact lens is produced is glued.

5. A process according to one of claims 1 to 4 characterised in that after the rear face is produced the front face of the contact lens blank (1) is produced on the contact lens blank when still deformed.

6. A process according to claim 5 characterised in that a holder (2) is used which comprises a machinable material, preferably a material with similar machining properties to the contact lens blank (1).

## Revendications

1. Procédé pour la fabrication de lentilles de contact avec au moins une face arrière asphérique dans la zone de bordure, torique en particulier, selon lequel une ébauche de lentille de contact (1) est placée dans un support (2) et déformée élastiquement dans un méridien principal, au moins dans la zone de bordure, la face arrière de la lentille de contact est réalisée par la technique de tournage sur l'ébauche de lentille de contact déformée, et la lentille de contact est détendue après sa fabrication, caractérisé en ce que, pour la déformation élastique, l'ébauche de lentille de contact (1) est pressée et fixée contre une surface d'appui conique (21) par une force (23) agissant le long du méridien principal et perpendiculairement à ce dernier, l'ébauche de lentille de contact (1) n'étant pas déformée dans le méridien principal situé perpendiculairement à l'autre méridien.

2. Procédé suivant la revendication 1, caractérisé en ce que l'ébauche de lentille de contact (1) détendue est déformée élastiquement en bordure dans l'un des méridiens principaux de la valeur correspondante à une différence de hauteur sagittale (Δh), obtenue en bordure de la face arrière sur une lentille de contact avec un rayon central (R₁) prédéfini et une différence prédéfinie des rayons (R₁ - R₂) dans les deux méridiens principaux.

3. Procédé suivant l'une des revendications 1 et 2, caractérisé en ce que l'ébauche de lentille de contact (1) déformée est collée sur le support (2) avant le tournage de la face arrière.

4. Procédé suivant la revendication 3, caractérisé en ce que l'ébauche de lentille de contact (1) présente un tronc (10) placé dans le support, et en ce que le support présente une surface d'appui essentiellement conique, contre laquelle est collée la partie consécutive au tronc de l'ébauche de lentille de contact (1), à partir de laquelle est fabriquée la lentille de contact.

5. Procédé suivant l'une des revendications 1 à 4, caractérisé en ce que la face avant de l'ébauche de lentille de contact (1) est réalisée sur l'ébauche encore déformée, après la réalisation de la face arrière.

6. Procédé suivant la revendication 5, caractérisé par l'utilisation d'un support (2) composé d'une matière usinable, de préférence d'une matière avec des propriétés d'usinage analogues à celles de l'ébauche de lentille de contact (1).
